# EUROPÄISCHE PATENTSCHRIFT

(11) **EP 2 129 477 B1**
(45) Veröffentlichungstag und Bekanntmachung des Hinweises auf die Patenterteilung: **08.07.2015**
(21) Anmeldenummer: 08734932.0
(22) Anmeldetag: 01.04.2008
(51) Int. Cl.: B07B 1/46, B07B 1/12, B01D 29/44, B01D 33/073, D21D 5/16

(54) **SIEBVORRICHTUNG**
SIFTING DEVICE
DISPOSITIF DE FILTRATION

(30) Priorität: 02.04.2007 DE 102007015901
(43) Veröffentlichungstag der Anmeldung: 09.12.2009
(73) Patentinhaber: Andritz Fiedler Gmbh, 93057 Regensburg (DE)
(72) Erfinder: MICKELAT, Thomas, 93149 Nittenau (DE); TICHY, Christoph, 93051 Regensburg (DE)
(74) Vertreter: Hering, Hartmut
(86) Internationale Anmeldenummer: PCT/EP2008/002580
(87) Internationale Veröffentlichungsnummer: WO 2008/119548

(56) Entgegenhaltungen:
- EP-A- 0 417 408
- EP-A- 0 499 154
- EP-A- 0 808 941
- EP-A- 1 630 282
- US-A- 3 901 801
- US-B2- 7 125 491

## Beschreibung

Die Erfindung befasst sich mit einer Siebvorrichtung, bei der Siebschlitze oder Siebspalte zwischen vorzugsweise profilierten Siebstäben gebildet werden, welche an ihrem Fußbereich in Bezug auf Aufnahmeausnehmungen von Tragelementen aufgenommen und an diesen dauerhaft befestigt sind. Derartige Siebvorrichtungen werden auch als "Stabsiebvorrichtungen" bezeichnet. Diese Siebvorrichtungen können in ebener Gestalt als Siebplatten oder in gerundeter Form als Siebkörbe ausgestaltet sein.

Siebvorrichtungen dieser so genannten "Stabsiebbauweise" sind an sich bekannt. Aus EP 0 316 570 sind ein Siebkorb und ein Verfahren zu dessen Herstellung bekannt, welcher parallel zu seiner Rotationssymmetrieachse verlaufende Siebschlitze hat, und der einzelne Profilstäbe bzw. profilierte Siebstäbe umfasst, die in vorher durch genaues Fräsen hergestellten Aussparungen an Tragelementen in Form von Tragringen eingesetzt und dort durch Schweißen oder Löten festgelegt sind. Zur dauerhaften Befestigungsverbindung von Siebstab und Aufnahmeausnehmung am Tragelement ist dort das Reibschweißen oder Pressschweißen als Möglichkeit angegeben. Ferner kommen dort als Schweißverfahren das Elektro-Laserstrahl- und Elektronenstrahlschweißen oder auch ein autogenes Schweißen in Betracht. Ferner ist dort ein Lötverfahren, insbesondere Hartlöten als geeignet beschrieben und ein weiteres, geeignetes, hochwertiges Lötverfahren ist das Vakuum-Löten, wodurch man eine qualitativ hochwertige dauerhafte Verbindung von Siebstäben und Tragelementen erhält, was aber fertigungstechnisch sehr aufwändig ist. Zur Herstellung eines solchen Siebkorbs werden in ein Gerüst von Tragelementen, dort als Tragringe ausgebildet, als Siebstäbe Profilstäbe eingelegt und durch einen Schweißvorgang zunächst festgepunktet und dann festgeschweißt. Die Siebstäbe werden hierbei konturmäßig festgeschweißt, d.h. im Wesentlichen entlang den Kanten der Aufnahmeausnehmungen. Ferner ist dort erwähnt, dass man diese Siebstäbe durch Kleben mit den Tragelementen verbinden kann.

Aus EP 0 499 154 B1 ist ein Siebkorb gemäß dem Oberbegriff des Anspruchs 1 bekannt, bei dem das Schweißen vermieden werden soll und doch eine eindeutige Festlegung der Siebstäbe in den Tragelementen ermöglicht werden soll. Hierzu wird die Verbindung zwischen den einzelnen Siebstäben und den Tragelementen als eine Schnappverbindung ausgelegt, so dass man die Siebstäbe quer zu der Längserstreckung der Tragelemente in diese hineinpressen kann. Bei dieser Auslegung ist eine passende Abstimmung von Siebstabprofil und Aufnahmeausnehmungen im Tragelement erforderlich, um die Siebstabprofilquerschnitte fest in den Aufnahmeausnehmungen der Tragelemente einzuklemmen. Hierbei werden die Tragelemente parallel zueinander mit gegenseitigem, dem Abstand der Tragelemente entsprechendem Abstand in einer Vorrichtung gehalten, und dann werden die Siebstäbe nacheinander in die Aufnahmeausnehmungen aller Tragelemente gleichzeitig eingedrückt. Auch kann man bei der Herstellung ein Gegenbiegen vorsehen, um die Aufnahmeausnehmungen geringfügig aufzuweiten und hierdurch das Einsetzen der Siebstäbe zu erleichtern. Falls sich Zwischenräume zwischen dem Siebstab und dem Tragelement nach dem Biegen ergeben sollten, werden diese zur Vermeidung einer Gefahr einer Zopfbildung mit flüssigem Kunststoff (Loctite) abgedichtet.

Aus EP 0 808 941 B1 sind ein Verfahren zur Herstellung einer Siebvorrichtung mit spaltförmigen Öffnungen und eine danach hergestellte Siebvorrichtung bekannt. Demnach soll ein wirtschaftlich günstiges Verfahren zur Herstellung derartiger Siebvorrichtungen bereitgestellt werden, welche optimale Festigkeiten und Oberflächeneigenschaften haben. Hierbei werden die profilierten Siebstäbe durch einfaches Einschieben in ihre Position in der Aufnahmeausnehmung des Tragelements gebracht, fixiert und verbleiben in diesen, bis ein Bindemittel für den endgültigen festen Halt sorgt. Das Bindemittel stellt eine unlösbare Verbindung an den Kontaktflächen her, wie dies beim Löten, Kleben oder Schweißen erreicht werden kann. Beim reinen Kontaktschweißen stammt dann das Bindemittel als Schmelze aus den Bauteilen selbst. Als vorteilhaft lässt sich bei dieser Herstellung als Lötverfahren ein Hartlöten bei einer Temperatur bis zu 900°C einsetzen. Auch kann man gegebenenfalls höhere Temperaturen wählen. Als ein weiteres Bindemittel zur Herstellung der Verbindung kann alternativ ein Klebstoff eingesetzt werden, welcher eine Herstellung bei relativ niedrigen Temperaturen gestattet. Beispielsweise kommt ein technischer ZweiKomponenten-Klebstoff in Betracht, bei dessen Einsatz die Klemmkräfte zwischen Siebstäben im Fußbereich und in den Aufnahmeausnehmungen der Tragelemente erhalten bleiben.

Aus EP 1 205 227 A1 sind ein Verfahren zum Herstellen von Siebkörben und nach diesem Verfahren hergestellte Siebkörbe bekannt. Zum Festlegen der Siebstäbe in zugeordnete Aufnahmeausnehmungen von Tragelementen werden die jeweiligen Siebstäbe an den Kontaktzonen mit den Tragelementen zum Aufrauen sandgestrahlt und dann werden die Siebstäbe mit den Tragelementen an diesen sandgestrahlten Bereichen mittels Kleben verbunden.

Bei all diesen bekannten Siebvorrichtungen, bei denen die Siebstäbe mittels einer stoffschlüssigen Verbindung gegebenenfalls kombiniert mit einer Kraftund Formschlussverbindung in den Tragelementen dauerhaft festgelegt sind, sind einerseits entweder zusätzliche Behandlungen der Kontaktflächen erforderlich, oder es ist eine eng tolerierte Abstimmung von Fußprofil der Siebstäbe und zugeordneter Geometrie der Aufnahmeausnehmungen in den Tragelementen erforderlich. Wenn Schweißverfahren oder Hartlötverfahren eingesetzt werden, so kommt noch die Schwierigkeit hinzu, dass, bedingt durch die hohen Temperaturen bei diesen Verfahren und durch hierdurch verursacht unterschiedliche Wärmedehnungserscheinungen sich Ungenauigkeiten bei der relativen Festlegung von Siebstäben und Aufnahmeausnehmungen in den Tragelementen ergeben können, was zu einem unerwünschten weiten Streubereich der Siebschlitz oder -spalten und hierdurch bedingten Ungenauigkeiten der Siebschlitzgeometrie führen kann.

Die Erfindung zielt daher darauf ab, eine Siebvorrichtung, d.h. eine so genannte "Stabsiebvorrichtung" bereitzustellen, bei der unter Überwindung der zuvor geschilderten Schwierigkeiten auf konstruktiv und fertigungstechnisch möglichst effiziente Weise eine zuverlässige, dauerhafte feste Verbindung zwischen den Tragelementen und den zugeordneten Siebstäben erreicht wird.

Nach der Erfindung wird hierzu eine Siebvorrichtung gemäß Anspruch 1 bereitgestellt.

Bei der Erfindung wird somit wenigstens am Flankenbereich zwischen der Profilstabaußenfläche und der Aufnahmeausnehmung in definierter Weise eine Tasche bzw. ein taschenförmiger Zwischenraum ausgebildet, welcher dann nach dem Einsetzen des jeweiligen Siebstabs in die jeweils zugeordnete Aufnahmeausnehmung des Tragelements mit einem geeigneten Füllmaterial derart ausgefüllt wird, dass man eine dauerhafte und feste Verbindung zwischen Siebstab und der zugeordneten Aufnahmeausnehmung des Tragelements erhält. Ferner kann der am Kopfbereich zwischen benachbarten Siebstäben gebildete Siebschlitz oder Siebspalt mit äußerst hoher Repetiergenauigkeit über den gesamten Umfang der Siebvorrichtung hinweg weitgehend gleichmäßig und in vorbestimmter Weise gebildet werden, so dass man ein im Betriebseinsatz qualitativ hochwertiges Produkt in Form einer Siebvorrichtung erhält. Die bei der Erfindung vorgesehene gezielte Ausbildung der Taschen ermöglicht auch eine weitgehend variable Wahl der Anzahl der Taschen im Flankenbereich als auch der Größe derselben sowie eine entsprechende Lage derselben, so dass man zuverlässig nach dem Ausfüllen der jeweiligen Tasche mit Füllmaterial eine dauerhafte und feste Verbindung des jeweiligen Siebstabs und auch eine zuverlässige und genaue Ausrichtung in der jeweiligen Aufnahmeausnehmung des Tragelements sicherstellen kann.

Gemäß bevorzugten Ausführungsformen kann die wenigstens eine Tasche durch eine entsprechende Formgebung des Siebstabfußbereichs und eine entsprechende Formgebung der Aufnahmeausnehmung im jeweiligen Tragelement oder auch durch die Kombination von beiden gebildet werden. Somit lässt sich bei der erfindungsgemäßen Siebvorrichtung auch die Fertigungstiefe auf die gewünschten und angestrebten Erfordernisse hinsichtlich Genauigkeit und Festigkeit auf den jeweiligen Anwendungsfall abstimmen. Im Hinblick auf die Dauerhaftigkeit der festen Verbindung von Siebstab und Ausnehmung haben sich in Abhängigkeit von der Siebstabform Überlappungsbereiche von Siebstab und dem jeweiligen Tragelement ergeben. Erfindungsgemäß liegt die Siebstabhöhe in einem Bereich von 3 mm bis 25 mm, insbesondere von 5 mm bis 18 mm. Vorteilhaft liegt dieser Überlappungsbereich in einem Bereich von 4 mm bis 50 mm, vorzugsweise in einem Bereich von 6 mm bis 25 mm. Bei einer derartigen Auslegung wird erreicht, dass die jeweilige Aufnahmeausnehmung im Tragelement einerseits eine zuverlässige und ausreichende Führung für den einzusetzenden Siebstab und auch eine zuverlässige Lagevorfixierung des Siebstabs in der Aufnahmeausnehmung gestattet, aber dennoch eine ausreichende Größe einer Füllmaterialtasche im Flankenbereich sowohl in Querrichtung als auch in Längsrichtung verbleibt, bis sie dann durch Ausfüllen mit einem Füllmaterial eine dauerhafte feste Verbindung von Siebstab und Tragelement herstellt.

Zweckmäßigerweise hat die jeweilige Tasche eine Quererstreckung von 0,05 bis 2,0 mm, vorzugsweise von 0,1 bis 0,5 mm, so dass die Tasche einen ausreichenden Freiraum für die spätere Aufnahme des Füllmaterials bildet und hierdurch eine sichere, zuverlässige und dauerhafte feste Verbindung von Siebstab und Tragelement gegeben ist.

Erfindungsgemäß umfasst der Flankenbereich der jeweiligen Aufnahmeausnehmung wenigstens eine Tasche mit einer Taschenfläche und wenigstens eine Auflagefläche für den Siebstab, so dass der Flankenbereich zuverlässig die Doppelfunktion hinsichtlich Ausrichtung des jeweiligen Siebstabs und der Aufnahmeausnehmung als auch hinsichtlich der Herstellung der festen Verbindung durch Ausfüllen der Tasche mit Füllmaterial erfüllen kann.

Erfindungsgemäß das Verhältnis der Summe der Auflageflächen zur Summe der Taschenflächen in einem Bereich von 0,1 bis 1.0. Wenn die Auflageflächen möglichst weit voneinander beabstandet liegen, so kann eine genaue Führung des Siebstabs in der Aufnahmeausnehmung sichergestellt werden.

Gemäß einer bevorzugten Ausführungsform nach der Erfindung wird bei der Siebvorrichtung die wenigstens eine Tasche durch wenigstens eine Ausnehmung im Siebstab oder in der Aufnahmeausnehmung des Tragelements oder auch von beiden, vorzugsweise im Flankenbereich, gebildet. Durch eine entsprechende Wahl der Außenkontur oder des Profils von Siebstab und/oder Aufnahmeausnehmung im Tragelement kann hierbei die Tasche gegebenenfalls ohne zusätzliche Bearbeitung an den Aufnahmeausnehmungen und/oder dem Siebstabfußbereich gebildet werden, da sich wenigstens eine Tasche allein durch die entsprechende Wahl der Geometrie der Profile von Siebstab und Aufnahmeausnehmung beim Zusammenfügen der beiden Teile ergibt.

Selbstverständlich können die Anzahl und die Gestaltgebung der wenigstens einen Tasche weitgehend frei gewählt werden, aber es hat sich als besonders vorteilhaft erwiesen, wenn die Tasche einen V-förmigen Querschnitt hat, wodurch sich dann der Befüllungsvorgang mit dem Füllmaterial vereinfachen lässt und insbesondere zuverlässig sichergestellt wird, dass das gesamte Taschenvolumen vollständig mit dem Füllmaterial ausgefüllt werden kann.

Vorzugsweise ist der Fußbereich des Siebstabs etwa V-förmig ausgebildet, wodurch eine zuverlässige Zentrierung des Siebstabs in der zugeordneten Aufnahmeausnehmung erreicht wird. Auch wird hierdurch eine Fertigungsautomatisierung erleichtert.

In bevorzugter Weise wird als Füllmaterial ein Klebstoff in die Tasche(n) eingebracht, welcher dann aushärtet, so dass sich in der Tasche eine Art Klebstoffpfropfen bildet, welcher in zuverlässiger Weise Scherkräfte und dergleichen aufnehmen kann.

Alternativ kann in die wenigstens eine Tasche ein clipförmiges Formschlusselement aus einem geeigneten Material eingebracht werden, mittels welchem der jeweilige Siebstab in dem jeweiligen Tragelement temporär fixiert wird, um auf geeignete Weise eine Herstellung der von der Siebvorrichtung gebildeten Siebschlitze oder -spalte vornehmen zu können, bevor dann die Tasche anschließend vollständig mit dem Füllmaterial ausgefüllt wird.

Zusätzlich oder anstatt der im Flankenbereich vorgesehenen wenigstens einen Tasche kann eine mit Füllmaterial ausfüllbare Tasche am Fußbereich des jeweiligen Siebstabs und dem Grund der Aufnahmeausnehmung im jeweiligen Tragelement vorgesehen sein. Auf diese Art und Weise kann zusätzlich auch am Fußbereich, oder nur an diesem, eine wirksame Verspannung zwischen Aufnahmeausnehmung und Siebstabfuß erreicht werden.

Um eine möglichst sichere Festlegung als auch eine präzise Ausrichtung im dauerhaft befestigten Zustand von Tragelement und Siebstab zu erreichen, ist an den gegenüberliegenden Flankenbereichen jeweils wenigstens eine Tasche vorgesehen, welche dann mit Füllmaterial ausgefüllt werden kann. Hierdurch wird erreicht, dass der Siebstab präzise und zentrisch ausgerichtet in der Aufnahmeausnehmung des Tragelements dauerhaft befestigt werden kann.

Wenn es sich bei Siebvorrichtung um einen Siebkorb handelt, so können die Tragelemente als Tragringe ausgebildet werden, so dass die Siebvorrichtung insgesamt gesehen eine zylindrische Außengestalt hat. Im Falle einer plattenförmigen Siebvorrichtung sind die Tragelemente in Form einer Tragleiste ausgebildet und diese kann dann vor oder nach der Bestückung mit Siebstäben beispielsweise zu einer zylindrischen Gestalt gerundet werden.

Zusammenfassend ist es bei der erfindungsgemäßen Siebvorrichtung wesentlich, dass zwischen einer Aufnahmeausnehmung im jeweiligen Tragelement und einem in die Ausnehmung einsetzbaren Siebstab wenigstens am Flankenbereich eine Tasche oder ein taschenförmiger Hohlraum vorgesehen ist, welcher mit einem Füllmaterial ausgefüllt wird, welches homogen und einheitlich oder aus kombinierten Befestigungsmitteln zusammengesetzt ausgebildet sein kann. Hierdurch erhält man trotz einer wesentlich erweiterten Fertigungsflexibilität eine Siebvorrichtung mit weitgehend gleichmäßigen Siebschlitzen oderspalten, wobei Präzisionsbearbeitungen nur an den Auflageflächen vorgenommen zu werden brauchen. Daher ist die erfindungsgemäße Siebvorrichtung wirtschaftlich günstig darstellbar.

Die Erfindung wird nachfolgend anhand einer nicht beschränkenden bevorzugten Ausführungsform unter Bezugnahme auf die beigefügte Zeichnung näher erläutert. Darin zeigt:
- Fig. 1: eine perspektivische Ansicht einer Siebvorrichtung in Form eines Siebzylinders oder Siebkorbs,
- Fig. 2 bis 10: jeweils schematische Ausschnittsansichten von unterschiedlichen Ausgestaltungsformen von Taschen am Flankenbereich der jeweiligen Aufnahmeausnehmung des Tragelements und dem zugeordneten Siebstab, und
- Fig. 11 bis 13: schematische Ausschnittsansichten zur Verdeutlichung von bevorzugten geometrischen Auslegungseinzelheiten.

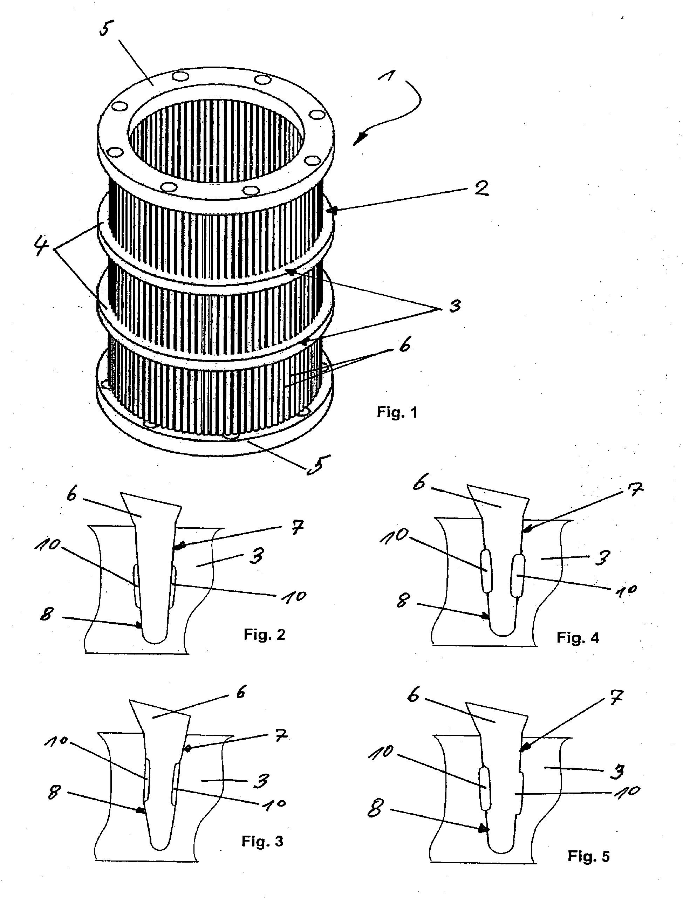

Als bevorzugtes Ausführungsbeispiel einer insgesamt mit 1 bezeichneten Siebvorrichtung ist in Figur 1 ein zylindrischer Siebkorb 2 gezeigt. Natürlich kann die erfindungsgemäße Siebvorrichtung 1 auch in Form einer Siebplatte ausgebildet sein. Die Siebvorrichtung 1 umfasst Tragelemente 3, welche bei dem dargestellten Beispiel als Tragringe 4 ausgebildet sind, und an den axialen Endbereichen der Siebvorrichtung 1 sind so genannte Stirnflansche 5 vorgesehen. In entsprechende Aufnahmeausnehmungen des Tragelements 3 sind Siebstäbe 6 eingesetzt, zwischen deren Kopfbereiche jeweils ein Siebschlitz oder Siebspalt gebildet wird. Ein solcher in Figur 1 schematisch dargestellter Stabsiebkorb ist an sich bekannt.

Wie aus den Figuren 1 bis 10 zu ersehen ist, ist bei der erfindungsgemäßen Auslegung der Siebvorrichtung 1 zwischen jedem Tragelement 3 und jedem zugeordneten Siebstab 6 wenigstens am Flankenbereich 7 der jeweiligen Aufnahmeausnehmung 8 an dem Tragelement 3 bzw. 4 eine mit Füllmaterial ausfüllbare Tasche 10 vorgesehen.

In den Figuren 2 bis 10 ist jeweils schematisch ein Ausschnitt eines Tragelements 3 und eines Siebstabs 6 zur Verdeutlichung der dauerhaften festen Verbindung dieser beiden Teile gezeigt.

Bei der Ausgestaltungsform nach Figur 2 wird die Tasche 10 oder werden die Taschen 10, welche einander gegenüberliegen, durch eine entsprechende Ausnehmung im Flankenbereich 7 des Tragelements 3 gebildet. Der zugeordnete Fußbereich des Siebstabs 6 ist ohne jegliche zusätzliche Bearbeitung vorgefertigt und es kann sich um ein vorbestimmtes, gewalztes Siebstabmaterial handeln, welches dann auf die entsprechend gewünschten Längen abgelängt wird. Im Ausführungsbeispiel nach Figur 3 wird die Tasche oder es werden die Taschen 10 dadurch gebildet, dass eine entsprechende Ausnehmung im Flankenbereich 7 des Siebstabs an gegenüberliegenden Stellen vorgesehen ist. Hierbei ist keine zusätzliche Bearbeitung der entsprechenden Flankenbereiche des Tragelements 3 erforderlich. Bei der Ausgestaltung nach Figur 4 wird die Tasche(n) 10 in gegenüberliegenden Flankenbereichen 7 durch zugeordnete Ausnehmungen am Tragelement 3 und am Fußbereich des Siebstabs 6 gebildet. Bei einer solchen Ausgestaltungsform kann man großvolumige Taschen 10 erstellen, die dann mit einem Füllmaterial, wie Klebstoff oder dergleichen, ausgefüllt werden. Hierdurch kann man Taschen 10 verwirklichen, welche relativ große Quererstreckungen haben.

Bei der Ausführungsform nach Figur 5 werden am Flankenbereich 7 gegenüberliegende Taschen 10 dadurch gebildet, dass die in Figur 5 links liegende Tasche durch eine Kombination einer Ausnehmung am Tragelement 3 und am Siebstab 6 gebildet wird, während die rechts liegende Tasche dadurch gebildet wird, dass eine entsprechende Ausnehmung lediglich am Tragelement vorgesehen ist. Hierdurch soll insbesondere eine Kombination von verschiedenen Ausbildungsweisen der Ausnehmungen zur Bildung der Tasche verdeutlicht werden.

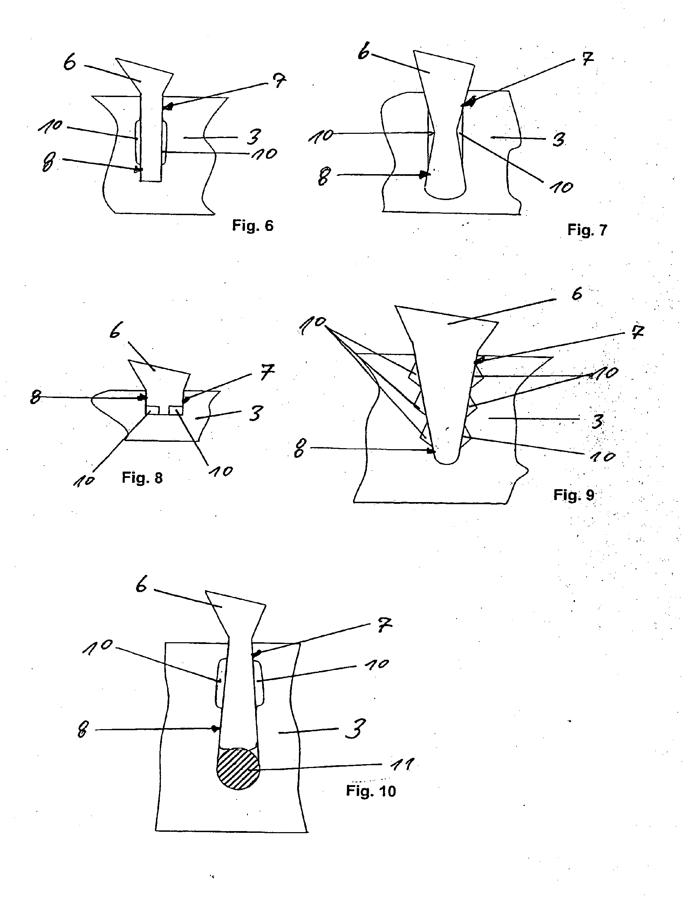

Für die Ausführungsvariante nach Figur 6 wird die oder es werden die Taschen 10 durch die entsprechende geometrische Ausgestaltungsform in Anpassung von Außenprofil des Siebstabs 6 und des Profils der Aufnahmeausnehmung 8 im Tragelement 3 gebildet. Auch in Figur 7 erhält man die Tasche oder die Taschen 10 durch entsprechende Ausgestaltungsformen von Aufnahmeausnehmungen 8 am Tragelement 3 und Außengeometrie des Siebstabs 6, wobei in Figur 7 das Außenprofil des Siebstabs in einer solchen Weise abgeändert wird, dass es die Tasche 10 im Flankenbereich bildet, wenn die Aufnahmeausnehmung 8 im Tragelement 3 auf im Wesentlichen übliche Weise eingebracht wird.

Figur 8 dient zur Verdeutlichung einer Ausführungsvariante, bei der wenigstens eine Tasche 10 am Fußbereich des jeweiligen Siebstabs 6 gebildet wird, wobei diese Taschen 10 in geeigneter Weise mit entsprechendem Füllmaterial und Befestigungsmitteln den zugeordnete Siebstab in der Aufnahmeausnehmung 8 im Tragelement fest einspannen können.

Figur 9 verdeutlicht im Querschnitt im Wesentlichen V-förmige oder dreieckförmige Taschen 10, welche in geeigneter Weise in die Innenwand der Aufnahmeausnehmung 8 des Tragelements 3 eingeschnitten sind.

Figur 10 verdeutlicht eine weitere Ausführungsvariante, bei der am Flankenbereich 7 eine Tasche 10 ausgebildet ist, aber auch am Fußbereich des Siebstabs 6 eine zusätzliche 11 als Zwischenraum zwischen dem Grund der Aufnahmeausnehmung 8 des Tragelements 3 und dem Siebstabfuß vorgesehen ist. In diese zusätzliche Tasche 11 kann beispielsweise, wie schematisch angedeutet, ein clipförmiges Formschlusselement zu der primären Fixierung des Siebstabs 6 in der Aufnahmeausnehmung 8 eingesetzt werden.

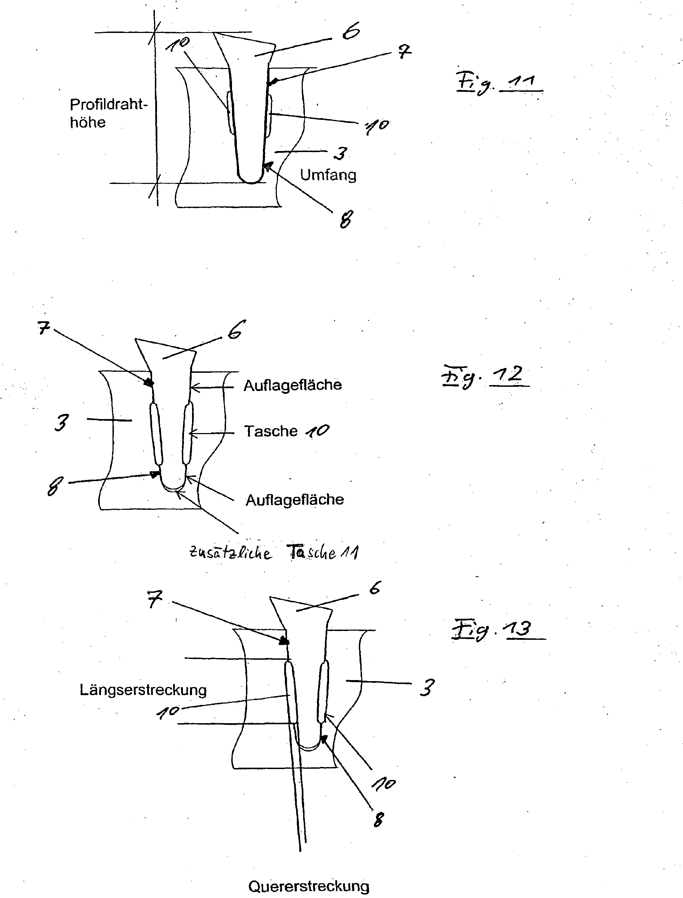

Anhand der Figuren 11 bis 13 werden bevorzugte geometrische Größenverhältnisse bei der erfindungsgemäßen Siebvorrichtung verdeutlicht und erläutert.

In Figur 11 ist ein Siebstab 6 gezeigt, welcher eine Höhe bzw. eine Profilhöhe hat, die etwa 3 mm bis 25 mm beträgt, und vorzugsweise in einem Bereich von 5 mm und 18 mm liegt. Bei einer solchen Ausgestaltungsform erhält man eine Überlappungserstreckung zwischen dem Tragelement 3 und dem Siebstab 6 von 4 mm bis 50 mm, und insbesondere von 6 mm bis 25 mm.

Aus der schematischen Darstellung nach Figur 12 ist zu ersehen, dass sich am Flankenbereich 7 Auflageflächen und Taschenflächen abwechseln. Als C wird das Verhältnis aus der Summe der Auflageflächen dividiert durch die Summe der Taschenflächen definiert. Der Verhältniswert C liegt in einem Bereich von 0,1 bis 1,0.

Figur 13 dient zur Verdeutlichung der Abmessungen der jeweiligen Tasche 10. Jede Tasche 10 hat eine Längserstreckung und eine Quererstreckung. Die Quererstreckung liegt vorzugsweise in einem Bereich von 0,05 mm bis 2,0 mm, und insbesondere in einem Bereich von 0,1 mm bis 0,5 mm.

Alle diese Bemessungsangaben haben sich als vorteilhaft im Hinblick auf die Dauerfestigkeit der Verbindung von Tragelement 3 und Siebstab 6 als auch im Hinblick für eine repetiergenaue und präzise Anordnung der Siebstäbe 6 erwiesen, um eine Siebvorrichtung 1 zu erhalten, deren Siebschlitze oder Siebspalte sowohl in Axialrichtung als auch in Umfangsrichtung möglichst gleichmäßig sind und auch bei den Beanspruchungen der Siebvorrichtung im Einsatz nahezu unverändert bleiben.

Selbstverständlich ist die Erfindung nicht auf die vorstehend beschriebenen Einzelheiten der bevorzugten Ausführungsformen unter Bezugnahme auf die beigefügte Zeichnung beschränkt, sondern es sind zahlreiche Abänderungen und Modifikationen möglich, die der Fachmann im Bedarfsfall treffen wird, ohne den Schutzumfang der Erfindung zu verlassen. Natürlich sind auch Kombinationen der verschiedenen, anhand in den Figuren erläuterten Ausgestaltungsformen der Tasche 10 wie durch die Ansprüche definiert möglich, und es können auch von den Figuren abweichende Ausgestaltungsformen und Profilgebungen der Siebstabe 6 wie durch die Ansprüche definiert gewählt werden.

## Patentansprüche

1. Siebvorrichtung mit zwischen, vorzugsweise profilierten, Siebstäben (6) gebildeten Siebschlitzen oder -spalten, wobei die Siebstäbe (6) an ihrem Fußbereich in an die Fußbereichsgeometrie angepassten Aufnahmeausnehmungen (8) von Tragelementen (3) aufgenommen und an diesen dauerhaft befestigt sind, wobei zwischen jedem Trageelement (3) und jedem zugeordneten Siebstab (6) wenigstens am Auflageflächen für den Siebstab (6) bildenden Flankenbereich (7) der jeweiligen Aufnahmeausnehmung (8) wenigstens eine mit Füllmaterial ausfüllbare Tasche (10;) vorgesehen ist, wobei der Siebstab (6) eine Siebstabhöhe von 3 mm bis 25 mm, vorzugsweise von 5 mm bis 18 mm hat, **dadurch gekennzeichnet dass** C definiert als Verhältnis aus der Summe der Auflageflächen für den Siebstab (6) durch die Summe der Taschenflächen in einem Bereich von 0,1 bis 1,0 liegt.

2. Siebvorrichtung nach Anspruch 1, **dadurch gekennzeichnet, dass** sich die wenigstens eine Tasche (10) durch eine entsprechende Formgebung der Aufnahmeausnehmung (8) im jeweiligen Tragelement (3) bildet.

3. Siebvorrichtung nach Anspruch 1 oder 2, **dadurch gekennzeichnet, dass** sich in Abhängigkeit von der Siebstabform (2) eine Überlappung von Siebstab (6) und dem jeweiligen Tragelement (3) ergibt, welche in einem Bereich von 4 mm bis 50 mm, vorzugsweise in einem Bereich von 6 mm bis 25 mm liegt.

4. Siebvorrichtung nach einem der Ansprüche 1 bis 3, **dadurch gekennzeichnet, dass** die jeweilige Tasche (10; eine Quererstreckung von 0,05 bis 2,0 mm, vorzugsweise von 0,1 bis 0,5 mm hat.

5. Siebvorrichtung nach einem der Ansprüche 1 bis 4, **dadurch gekennzeichnet, dass** die wenigstens eine Tasche (10; durch wenigstens eine Ausnehmung im Siebstab (6) und/oder in der Aufnahmeausnehmung (8) des Tragelements (3), vorzugsweise im Flankenbereich (7), gebildet wird.

6. Siebvorrichtung nach einem der vorangehenden Ansprüche, **dadurch gekennzeichnet, dass** der Fußbereich des Siebstabes (6) im wesentlichen V-förmig ausgebildet ist.

7. Siebvorrichtung nach einem der vorangehenden Ansprüche, **dadurch gekennzeichnet, dass** das Füllmaterial ein Klebstoff ist.

8. Siebvorrichtung nach einem der vorangehenden Ansprüche, **dadurch gekennzeichnet, dass** wenigstens eine mit Füllmaterial ausfüllbare zusätzliche Tasche (11) am Fußbereich des jeweiligen Siebstabs (6) und der Aufnahmeausnehmung (8) im jeweiligen Tragelement (3) vorgesehen ist.

9. Siebvorrichtung nach einem der vorangehenden Ansprüche, **dadurch gekennzeichnet, dass** an den gegenüberliegenden Flankenbereichen (7) und jeweiligen Aufnahmeausnehmungen (8) im Tragelement (3) und dem jeweils zugeordneten Siebstab (6) jeweils wenigstens eine Tasche (10;) vorgesehen ist.

10. Siebvorrichtung nach einem der vorangehenden Ansprüche, **dadurch gekennzeichnet, dass** die Tragelemente (3) als Tragringe (4) ausgebildet sind.

11. Siebvorrichtung nach einem der vorangehenden Ansprüche, **dadurch gekennzeichnet, dass** die Siebvorrichtung als Siebzylinder oder Siebkorb (2), vorzugsweise als Stabsiebkorb, ausgebildet ist.

## Claims

1. Sieve device with sieve slots or gaps formed between, preferably profiled, sieve bars (6), wherein the sieve bars (6) are accommodated at their lower portion in locating recesses (8) adapted to the lower portion geometry of support elements (3) and are permanently fastened thereon, wherein between each support element (3) and each associated sieve bar (6), at least on the flank area (7) forming support surfaces for the sieve bar (6) of the respective locating recess (8), at least one pocket (10) is provided that can be filled with a filler material, wherein the sieve bar (6) has a sieve bar height of 3 mm to 25 mm, preferably of 5 mm to 18 mm, **characterised in that** C defined as the ratio of the total of support surfaces for the sieve bar (6) to the total of pocket surfaces is in a range from 0.1 to 1.0.

2. Sieve device in accordance with claim 1, **characterised in that** the at least one pocket (10) is formed by an appropriate shaping of the locating recess (8) in the respective support element (3).

3. Sieve device in accordance with claim 1 or 2, **characterised in that,** depending on the sieve bar shape (2), an overlap of sieve bar (6) and the respective support element (3) results, which is in a range from 4 mm to 50 mm, preferably in a range from 6 mm to 25 mm.

4. Sieve device in accordance with one of the claims 1 to 3, **characterised in that** the respective pocket (10) has a transverse extent of 0.05 to 2.0 mm, preferably from 0.1 to 0.5 mm.

5. Sieve device in accordance with one of the claims 1 to 4, **characterised in that** the at least one pocket (10) is formed by at least one recess in the sieve bar (6) and/or in the locating recess (8) of the support element (3), preferably in the flank area (7).

6. Sieve device in accordance with one of the preceding claims, **characterised in that** the lower portion of the sieve bar is substantially V-shaped (6).

7. Sieve device in accordance with one of the preceding claims, **characterised in that** the filler material is an adhesive.

8. Sieve device in accordance with one of the preceding claims, **characterised in that** at least one additional pocket (11) fillable with filler material is provided on the lower portion of the respective sieve bar (6) and the locating recess (8) in the respective support element (3).

9. Sieve device in accordance with one of the preceding claims, **characterised in that** at least one pocket (10) is provided on the opposing flank areas (7) and the respective locating recesses (8) in the support element (3) and the respective associated sieve bar (6).

10. Sieve device in accordance with one of the preceding claims, **characterised in that** the support elements (3) are configured as support rings (4).

11. Sieve device in accordance with one of the preceding claims, **characterised in that** die sieve device is configured as sieve cylinder or sieve basket (2), preferably as bar sieve basket.

## Revendications

1. Dispositif de tamisage avec des fentes ou interstices de tamisage formés entre des barres de tamis (6), de préférence profilées, les barres de tamis (6) étant reçues, au niveau de leur zone de base, dans des cavités de réception (8), adaptées à la géométrie de leur zone de base, d'éléments porteurs (3), et fixées à demeure à celles-ci, entre chaque élément porteur (3) et chaque barre de tamis associée (6) étant prévue, au moins au niveau de la zone de flanc (7) formant des surfaces d'appui pour la barre de tamis (6) de la cavité de réception respective (8), une poche (10) pouvant être remplie d'une matière de remplissage, la barre de tamis (6) présentant une hauteur de barre de tamis de 3 à 25 mm, de préférence de 5 à 18 mm, **caractérisé en ce que** C, défini comme étant le rapport résultant de la somme des surfaces d'appui pour la barre de tamis (6) divisée par la somme des surfaces de poche, se situe dans une plage de 0,1 à 1,0.

2. Dispositif de tamisage suivant la revendication 1, **caractérisé en ce que** l'au moins une poche (10) est formée par une conception correspondante de la cavité de réception (8) dans l'élément porteur respectif (3).

3. Dispositif de tamisage suivant la revendication 1 ou 2, **caractérisé en ce que** de la forme de la barre de tamis (2) résulte un chevauchement entre celle-ci et l'élément porteur (3) respectif, chevauchement qui se situe dans une plage de 4 mm à 50 mm, de préférence, de 6 à 25 mm.

4. Dispositif de tamisage suivant une des revendications 1 à 3, **caractérisé en ce que** la poche respective (10) présente une dimension transversale de 0,05 à 2,0 mm, de préférence, de 0,01 à 0,5 mm.

5. Dispositif de tamisage suivant une des revendications 1 à 4, **caractérisé en ce que** l'au moins une poche (10) est formée par au moins un évidement dans la barre de tamis (6) et/ou dans la cavité de réception (8) de l'élément porteur (3), de préférence, dans la zone de flanc (7).

6. Dispositif de tamisage suivant une des revendications précédentes, **caractérisé en ce que** la zone de base de la barre de tamis (6) est conçue essentiellement en forme de V.

7. Dispositif de tamisage suivant une des revendications précédentes, **caractérisé en ce que** la matière de remplissage est un adhésif.

8. Dispositif de tamisage suivant une des revendications précédentes, **caractérisé en ce qu**'au moins une poche supplémentaire (11) pouvant être remplie de matière de remplissage est prévue dans la zone de base de la barre de tamis respective (6) et de la cavité de réception (8) dans l'élément porteur respectif (3).

9. Dispositif de tamisage suivant une des revendications précédentes, **caractérisé en ce qu**'au moins une poche (10) est prévue au niveau des zones de flanc opposées (7) et des cavités de réception respectives (8) dans l'élément porteur (3) et de la barre de tamis respectivement associée (6).

10. Dispositif de tamisage suivant une des revendications précédentes, **caractérisé en ce que** les éléments porteurs (3) sont conçus comme anneaux porteurs (4).

11. Dispositif de tamisage suivant une des revendications précédentes, **caractérisé en ce que** le dispositif de tamisage est conçu comme cylindre de tamisage ou panier de tamisage (2), de préférence comme panier de tamisage à barres de tamis.
